(19) Europäisches Patentamt
European Patent Office
Office européen des brevets

(11) Veröffentlichungsnummer : **0 533 727 B1**

# (12) EUROPÄISCHE PATENTSCHRIFT

(45) Veröffentlichungstag der Patentschrift :
**19.01.94 Patentblatt 94/03**

(51) Int. Cl.$^5$ : **B01J 20/32**

(21) Anmeldenummer : **91910607.0**

(22) Anmeldetag : **11.06.91**

(86) Internationale Anmeldenummer :
**PCT/EP91/01086**

(87) Internationale Veröffentlichungsnummer :
**WO 91/19565 26.12.91 Gazette 91/29**

## (54) ADSORPTIONSMATERIAL ZUR SELEKTIVEN ENTFERNUNG VON LDL ODER/UND vLDL.

(30) Priorität : **12.06.90 DE 4018778**

(43) Veröffentlichungstag der Anmeldung :
**31.03.93 Patentblatt 93/13**

(45) Bekanntmachung des Hinweises auf die Patenterteilung :
**19.01.94 Patentblatt 94/03**

(84) Benannte Vertragsstaaten :
**AT BE CH DE DK ES FR GB IT LI NL SE**

(56) Entgegenhaltungen :
**EP-A- 244 802**
**EP-A- 295 808**
**DE-A- 2 426 698**
**US-A- 4 775 483**
**US-A- 4 828 695**

(73) Patentinhaber : **B. Braun Melsungen AG**
**Postfach 120**
**D-34209 Melsungen (DE)**

(72) Erfinder : **RAUH, Andreas**
**Herkulesstrasse 5**
**D-3500 Kassel (DE)**
Erfinder : **SICHLER, Waltraud**
**Blumenstrasse 17**
**D-3508 Melsungen 8 (DE)**
Erfinder : **HENKE, Gudrun**
**Schlothweg 10**
**D-3508 Melsungen (DE)**
Erfinder : **FELLER, Wolfgang**
**Brauereiweg 8**
**D-3508 Melsungen (DE)**
Erfinder : **MORSCH, Gerold**
**Gassengärten 4**
**D-3579 Willingshausen (DE)**
Erfinder : **KOCH, Susan**
**Schwänheit 5**
**D-3505 Gudensberg (DE)**

(74) Vertreter : **Weickmann, Heinrich, Dipl.-Ing. et al**
**Patentanwälte H. Weickmann, Dr. K. Fincke**
**F.A. Weickmann, B. Huber Dr. H. Liska, Dr. J. Prechtel, Dr. B. Böhm Postfach 86 08 20**
**D-81635 München (DE)**

**EP 0 533 727 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Adsorptionsmaterial und ein Verfahren zur Entfernung von LDL- oder/und vLDL-Cholesterin oder/und Lp(a)-Lipoprotein aus wäßrigen Flüssigkeiten wie Plasma oder Serum, ein Verfahren zur Bestimmung der Konzentration von LDL- oder/und vLDL-Cholesterin oder/und Lp(a)-Lipoprotein in Flüssigkeiten sowie eine Vorrichtung für die genannten Verfahren.

Die selektive Eliminierung von LDL oder/und Lp(a)-Lipoprotein und/oder Fibrinogen aus Humanblut ist aus medizinischer Sicht, insbesondere für die Behandlung einer schweren familiären Hypercholesterinämie und Atherosklerose, erwünscht (Trans.Am.Soc.Artig.Intern.Organs. (1986) 17, 104-107). Die familiäre Hypercholesterinämie stellt die gefährlichste Art der Hyperlipidämie dar. In ihrer homozygoten Form drohen dem damit betroffenen Personenkreis bereits in der Jugend (und sogar im Kindesalter) die Erkrankung und der Tod an einer schweren und rapid fortschreitenden Koronaropathie (Plasma Sep. und Plasma Frac. 272-280 (Karger Basel, 1983)).

Die Behandlung der schweren Hypercholesterinämie hat bis heute nicht zu befriedigen vermocht. Dies gilt sowohl für die verschiedenen Formen einer Diät wie für die medikamentöse Therapie. Deshalb wurde versucht, die schweren Stoffwechselstörungen über den Weg der extrakorporalen Entfernung der atherogenen Lipoproteinfraktionen (very Low Density und Low Density Lipoproteine, vLDL und LDL) aus Blut anzugehen. Durch ein extrakorporales Behandlungsverfahren sollten Gesamt-Cholesterinspiegel bzw. LDL-Cholesterinspiegel in den Bereichen von <200 mg/dl bzw. <130 mg/dl erreicht werden (Klin. Wochenzeitschrift (1987) 69, 161-168; GIT Labor Medizin (1989) 9, 386-395).

Die Eliminierung von LDL-Cholesterin wird derzeit mit drei verschiedenen extrakorporalen Verfahren durchgeführt. Neben einer Kaskadenfiltration (Artherosclerosis 60, 23-37 (1988), Artherosclerosis 73, 197-202 (1988) kann LDL-Cholesterin durch Präzipitation mit Heparin im sauren pH-Wert-Bereich (HELP-Verfahren = Heparin induzierte extrakorporale LDL-Präzipitation) eliminiert werden (Klin. Wochenschrift 65, 161-168 (1987), EP 0 166 324, DE 33 10 727).

Die dritte Möglichkeit, LDL-Cholesterin aus Blut oder Plasma zu eliminieren, besteht in der Adsorption an geeignete Trägermaterialien. So können z.B. monoklonale und/oder polyklonale Antikörper, die das LDL-Cholesterin spezifisch binden, an ein poröses polyanionisches Trägermaterial gekoppelt werden (J.Clin.Apheresis 4, 59-65 (1988), Proc. Natl.Acad.Sci. USA 78, 611-615 (1981), JP 60239425). Neben Antikörpern sind auch poröse Polyanionen wie Heparin (DE 36 17 672, US 4,637,944, US 4,103,685) und synthetische Oligo- oder Polyanionen wie z.B. sulfatierte Polysaccharide (EP 0 110 409, EP 0 225 867, EP 143 369, US 4,096,136, US 4,603,010) an Trägermaterialien gebunden und für die spezifische LDL-Adsorption aus Plasma oder Blut untersucht. Als Trägermatrix für die Bindung der beschriebenen Substanzen werden Cellulose, organische Polymerisate, beschichtete Kieselgele und Agarose beschrieben.

Die mit den bisher beschriebenen Adsorptionsmaterialien erzielten Erfolge sind jedoch insbesondere für die Belange der Adsorption von LDL an einer Matrix in einem extrakorporalen Perfusionssystem zu medizinisch-therapeutischen Zwecken unzureichend, da entweder die Bindungskapazität und/oder Selektivität dieser Materialien gegenüber LDL nicht den praktischen Anforderungen genügt und/oder physiologische Schutzmechanismen (z.B. Gerinnungssystem, Komplementsystem) aktiviert werden (Artheriosclerosis 73, 143-148 (1988), Schweiz.med.Wschr. 119, 55-58 (1989)).

Der Erfindung lag daher die Aufgabe zugrunde, Materialien bereitzustellen, die es erlauben, die artherogenen Lipoproteinfraktionen aus wäßrigen Flüssigkeiten, insbesondere aus Vollblut, Plasma und Serum zu entfernen und zugleich die Voraussetzungen zur einfachen und sicheren Verwendung in einem extrakorporalen Perfusionssystem für den Menschen erfüllen. Diese Voraussetzungen sind beispielsweise Sterilisierbarkeit mit Dampf, Hitze oder $\gamma$-Strahlen, minimale Freisetzung von Partikeln im Mikrometerbereich, keine Freigabe toxischer Inhaltsstoffe und eine ausreichend hohe Durchflußgeschwindigkeit durch die Materialien im Bereich bis zu 200 ml/min, hohe spezifische Selektivität und maximale Kapazität gegenüber den zu eliminierenden Molekülen. Neben den zitierten Kriterien sollte dieses Perfusionssystem, bzw. das Material eine schnelle kinetische Bindungsreaktion mit den zu bindenden Molekülen eingehen können.

Diese Aufgabe wird erfindungsgemäß gelöst durch ein Adsorptionsmaterial zur selektiven Entfernung von LDL- oder/und vLDL-Cholesterin aus wässrigen Flüssigkeiten, insbesondere aus Blut, Plasma oder Serum, bestehend aus Glaskörpern, welche Poren aufweisen, als festem Trägermaterial mit über an deren Oberfläche vorhandene Silanolgruppen kovalent gebundenen organischen funktionellen Gruppen als Liganden, das dadurch gekennzeichnet ist, daß es als Liganden mindestens eine Ethergruppierung mit einer endständigen $\alpha,\beta$-Diolgruppe enthaltende Alkylreste mit 4 bis 12 C-Atomen aufweist und keine freien Silanolgruppen vorhanden sind.

Die im erfindungsgemäßen Adsorptionsmaterial als Träger verwendeten Glaskörper schließen Glasbeads, also Glaskügelchen bestimmter Größe, bestehen aus einer Siliciumdioxid-Phase mit Restgehalten von Borsäure und Alkalioxid sowie Glasmembranen in Form von Hohlfasern ein. Glasbeads sind beispielsweise in der DE-A 24 54 111 und der DE 24 62 567 beschrieben. Das erfindungsgemäße Adsorptionsmaterial unterscheidet sich jedoch von den im Handel frei erhältlichen Varianten (Controlled Pore Glass, Nature 206 (1969) 693-696, Anbieter bspw. Dow Corning, Electro Nucleonics, Waiko Industries) insofern, daß alle frei zugänglichen Silanolgruppen durch organisch funktionelle Reste substituiert wurden. Die gezielte Eliminierung von Silanolgruppen verhindert die unspezifische Bindung von Proteinen. Adsorber-Materialien auf reiner CPG (Controlled Pore Glass)-Basis mit vollständig oder zum Teil intakten Silanolgruppen zeigen unerwünschte HDL-Bindungseigenschaften (siehe Beispiel 1). Überraschenderweise wurde dagegen festgestellt, daß die erfindungsgemäß substituierten Adsorptionsmaterialien, welche an allen Silanolgruppen substituiert sind, hiervon mindestens an einer Stelle durch eine Äthergruppierung und entweder daran folgend einer endständigen α,β-Diolgruppe in der Lage sind, mit einer bislang unerreichten kinetischen Reaktion, Selektivität und Bindungskapazität LDL-Cholesterin und vLDL-Cholesterin und Lp(a)-Lipoprotein zu binden.

In einer bevorzugten Ausführungsform der Erfindung entsprechen die Liganden der allgemeinen Formel I

$$-(CH_2)_x - O - (CH_2)_y - \underset{\displaystyle OH}{\underset{|}{CH}} - CH_2OH \qquad (I)$$

wobei x und y ganze Zahlen von 1 bis 5.

Besonders bevorzugte Liganden sind die 1,2-Dihydroxypropyl-3-oxypropyl-Reste.

Das erfindungsgemäße Adsorptionsmaterial kann erfindungsgemäß an allen Silanolgruppen mit den genannten Liganden substituiert sein. Es ist jedoch auch möglich, daß es neben den genannten Liganden weitere Liganden aufweist. In einer bevorzugten Ausführungsform der Erfindung weist das Adsorptionsmaterial als weitere Liganden Verbindungen der allgemeinen Formel II

$$-(CH_2)_x - O - (CH_2)_y - CH_2 - OH \qquad (II)$$

auf, worin

x und y ganze Zahlen von 1 bis 5 bedeuten.

Besonders bevorzugt sind hier als Liganden der Formel II erfindungsgemäß 1-Hydroxyethyl-3-oxybutyl- und 1-Hydroxypropyl-3-oxypropyl-Reste.

Als wiederum weitere bevorzugte Liganden können im erfindungsgemäßen Adsorptionsmaterial noch Verbindungen der allgemeinen Formel III

$$-(CH_2)_x - O - (CH_2)_y - CR_1R_2R_3 \qquad (III)$$

auftreten, wobei $R_1$ einen Methoxyrest und

$R_2$ und $R_3$ H oder einen Methoxyrest und

x und y ganze Zahlen von 1 bis 5 bedeuten.

Besonders bevorzugt ist hier der 1,1-Dimethoxyethyl-3-oxypropyl-Rest.

Sind im erfindungsgemäßen Adsorptionsmaterial Liganden sowohl der allgemeinen Formel I als auch der Formeln II und III vorhanden, ist es bevorzugt, daß diese in einem Mengenverhältnis von ungefähr 1,3:1:0,8 an das Trägermaterial über die Silanolgruppen gebunden sind.

Die erfindungsgemäßen Adsorptionsmaterialien weisen je nach Porosität vorzugsweise eine Oberfläche zwischen 30 und 300 $m^2/g$ auf. Sie zeichnen sich unter anderem durch ihre Heißdampfsterilisierbarkeit aus.

Der Belegungsgrad des Trägermaterials mit Liganden beträgt vorzugsweise 2 bis 4 $\mu mol/m^2$, ebenfalls je nach Porosität des eingesetzten Materials.

Der Porendurchmesser der Glaskörper ist im erfindungsgemäßen Adsorptionsmaterial größer als die zu adsorbierenden Moleküle LDL- und vLDL-Cholesterin, also größer als 30 nm.

Es ist bevorzugt, daß die eingesetzten Glasbeads einen Korndurchmesser von 60 bis 250 µm und einen Porendurchmesser von 50 bis 150 nm aufweisen.

Ein weiterer Gegenstand der Erfindung ist ein Verfahren zur Herstellung eines erfindungsgemäßen Adsorptionsmaterials, bei dem der gewünschte Ligand mittels einer Silierungsreaktion über eine Disiloxan-Bindung -Si-O-Si-L, wobei L den Liganden bedeutet) an die SiOH-Gruppen der Glaskörper gekoppelt werden. Diese Silierungsreaktion ist von Shung et al. (J. of Chrom. 120 (1976) 321-333) beschrieben. Erfindungsgemäß einsetzbare Ausgangsmaterialien werden u.a. unter der Bezeichnung Bioranglasträgermaterialien oder Controlled Pore Glass (CPG)-Träger von den Herstellern Schott, Mainz FRG; Dow Corning, Electro Nucleonics und Waiko Industries angeboten. In einer bevorzugten Ausführungsform der Erfindung setzt man zur Silierungsreaktion γ-Glycidoxypropyltrimethoxysilan und einen Silanolbioranträger in Form von Glasbeads ein unter Erhalt von Glycidoxypropyl-Bioran-Disiloxan und unterzieht dieses Produkt einer Säurebehandlung, wobei der Epoxidrest sich öffnet und zu dem erfindungsgemäß besonders bevorzugten Liganden, dem 1,2-Dihydroxypropyl-3-oxypropyl-Rest, gebunden als Disiloxanfunktion, führt.

Die Umsetzung der intakten Silanolgruppen mit γ-Glycidoxypropyltrimethoxysilan erfolgt nach der oben genannten Silierungsreaktionsvorschrift.

Die erfindungsgemäß synthetisierten und verwendeten Adsorptionsmaterialien zeigen ausgezeichnete Eigenschaften, selektiv und quantitativ LDL- und vLDL-Cholesterin, aber auch Lp(a)-Lipoprotein zu binden, ohne gleichzeitig HDL-Cholesterin zu eliminieren.

Wiederum ein weiterer Gegenstand der Erfindung ist ein Verfahren zur Entfernung von LDL- oder/und vLDL-Cholesterin aus wäßrigen Flüssigkeiten, insbesondere Blut, Plasma oder Serum, bei dem man die Flüssigkeit über ein erfindungsgemäßes Adsorptionsmaterial leitet. Eine weitere Anwendung des erfindungsgemäßen Adsorptionsmaterials und damit ein weiterer Gegenstand der Erfindung ist ein Verfahren zur Bestimmung der Konzentration von LDL- oder/und vLDL-Cholesterin in wäßrigen Flüssigkeiten, insbesondere Blut, Plasma oder Serum, das dadurch gekennzeichnet ist, daß man mit Hilfe eines erfindungsgemäßen Adsorptionsmaterials LDL- und vLDL-Cholesterin chromatographisch aus der Flüssigkeit abtrennt und nach der Elution vom Adsorptionsmaterial deren Konzentration nach an sich bekannten Methoden bestimmt. Es ist hierbei bevorzugt, die Elution mit hochmolekularer Kochsalzlösung, einem Glycerin-Wasser-Gemisch oder einer Harnstoff-Lösung durchzuführen (Beispiel 10).

Gegenüber vergleichbaren Materialien zeichnen sich die erfindungsgemäßen Materialien dadurch aus, daß sie LDL und vLDL mit einer bislang unerreichten kinetischen Reaktion, Selektivität und Bindungskapazität (> 20 mg LDL pro ml Adsorbens) binden, daß sie diese Komponenten nicht nur aus Plasma oder Serum, sondern auch direkt aus stabilisiertem Vollblut mit hoher Effizienz eliminieren und daß sie keine physiologischen Schutzmechanismen (z.B. Gerinnungssystem, Komplementsystem) durch unspezifische Adsorption entsprechender Komponenten aktivieren (Beispiel 10 und 11).

Ein weiterer Gegenstand der Erfindung ist eine Vorrichtung zur extrakorporalen Entfernung von LDL oder/und vLDL-Cholesterin aus wäßrigen Flüssigkeiten, insbesondere Blut, Plasma oder Serum, wobei diese Vorrichtung aus einem zylindrischen Gehäuse besteht, das mit einem erfindungsgemäßen Adsorptionsmaterial gefüllt ist und an seinen stirnseitigen Enden mit Deckeln versehen ist, die jeweils einen zentralen Zu- bzw. Ablaufstutzen aufweisen. Vorzugsweise weist dieses zylindrische Gehäuse einen Durchmesser von 3 bis 20 cm, vorzugsweise 5 bis 10 cm und eine Länge von 1 bis 40 cm, vorzugsweise 10 bis 20 cm auf. Das bevorzugte Material für das Gehäuse ist Glas oder Kunststoff (Beispiel 10 und 11).

In einer weiteren bevorzugten Ausführungsform der erfindungsgemäßen Vorrichtung weist das Gehäuse am zulaufseitigen Dekkel ein Sieb mit Porenweite 10 bis 300 µm, vorzugsweise 20 bis 100 µm auf. Hierdurch wird das Verstopfen der Vorrichtung durch in der wäßrigen Flüssigkeit enthaltene größere Partikel verhindert. Die erfindungsgemäße Vorrichtung ist in einer Verpackung mittels γ-Strahlung oder Hitze sterilisierbar und damit besonders geeignet zum Einsatz in einem extrakorporalen Perfusionssystem. Sie kann jedoch auch praktisch als Chromatographiesäule, insbesondere zur erfindungsgemäßen Bestimmung der LDL- und/oder vLDL-Cholesterinkonzentration verwendet werden.

In einer besonders bevorzugten Ausführungsform der Erfindung ist das Gehäuse der Vorrichtung in einen geschlossenen Kreislauf integriert, in dem die wäßrige Flüssigkeit mittels einer Pumpe zirkuliert wird. Besonders bevorzugt ist die Vorrichtung mit zwei zylindrischen Gehäusen (zwei Adsorptionskapsein) ausgerüstet, die wechselseitig über Ventile angesteuert und mit der zu behandelnden wäßrigen Flüssigkeit in einem geschlossenen Kreislauf mittels einer Pumpe durchgespült werden. Die jeweils nicht durchspülte, von dem LDL oder vLDL gesättigte Kapsel wird mit einer Regenerationslösung, vorzugsweise handelt es sich dabei um hochmolekulare Kochsalzlösungen, um Glycerin-Wasser-Gemische, aber auch um Harnstofflösungen, eluiert.

Die erfindungsgemäße Vorrichtung kann auch in den Dialysierflüssigkeitskreislauf eines Dialysegerätes zur Regeneration der Dialysierflüssigkeit in Kombination mit weiteren Adsorbern integriert werden.

Die folgenden Beispiele sollen in Verbindung mit den Abbildungen die Erfindung weiter erläutern. Hierbei zeigen die Figuren

Figur 1 Festkörper-C-13 NMR-Spektren der Bioranglasmaterialien mit verschiedenen Liganden.

B e i s p i e l 1

Vergleichsbeispiel

Test der Adsorptionsselektivität und -kapazität von nativen CPG-Gläsern.

**Adsorbens**

CPG 500-Glas (Serva, Heidelberg) mit einem Porendurchmesser von 50 nm (enthält freie nicht umgesetzte Silanolgruppen als Oberfläche).

**Versuchsdurchführung**

Das Adsorbens wird mit bidestilliertem Wasser über eine G3 Nutsche gewaschen, in eine Einwegchromatographiesäule (5 x 70 mm) gefüllt und anschließend mit 100 ml 50 mM Tris-Cl pH 7,6 äquilibriert (Harzvolumen 1,6 ml/Säulenhöhe 8 cm).

Auf die Säule werden bei Raumtemperatur 6 ml Humanplasma (mit 3 Einheiten Na-Heparin/B. Braun Melsungen AG pro ml stabilisiert) gegeben und durch die Säule gepumpt (Volumenstrom 0,5 ml/min). Nach 2 ml Voreluat wurden aus jedem folgenden Milliliter des Eluats jeweils 600 µl Fraktion gezogen, die auftretenden "Zwischeneluate" (dies sind jeweils 400 µl bis zur nächsten Einzelfraktion auf volle ml bezogen) werden getrennt in einem Gefäß gesammelt und so zu einem Gemisch vereinigt (jeweils 1,6 ml bei einem Volumenlauf von 6 ml).

Als Bewertungsparameter für kinetische Adsorptionskapazitätsverläufe werden die Eluate 2, 3, 4, 5 und 6 ml herangezogen. Als "Screeningkriterium Selektivität" für die Selektivität einzelner synthetisierter Adsorbermaterialien werden die im Gemisch vereinigten Zwischeneluate ausgewertet. Von den Eluaten werden der Gesamtcholesterin-, der HDL-, der LDL- sowie der Proteingehalt bestimmt (Chod Pap-, Chod Jodid- und Biuret-Test).

**Tabelle 1: CPG 500 (mit freien Silanolgruppen)**

| | Ausgangsplasma (mg/dl) | Gemisch der Zwischeneluate (mg/dl) | Adsorptionskapazität (%) |
|---|---|---|---|
| Gesamtcholesterin | 217 | 147 | 32 |
| HDL-Cholesterin | 41 | 7 | 83 |
| LDL-Cholesterin | 153 | 119 | 22 |
| Gesamt-Protein | 7 | 6,3 | 10 |

Adsorptionskapazität in % errechnet sich aus:

$$\text{Adsorptionskapazität} = \frac{\text{Ausgangsplasma} - \text{Gem. Zwischeneluate} \times 100}{\text{Ausgangsplasma}}$$

Wie aus Tabelle 1 ersichtlich ist, ist natives CPG 500 Glas mit nicht umgesetzten Silanolgruppen in der Lage, Gesamt-Cholesterin zu binden. Da jedoch das HDL Cholesterin quantitativ eliminiert wird, relativiert sich die LDL-Bindungskapazität. Die HDL-Cholesterineliminierung muß als großer Nachteil betrachtet werden.

Beispiel 2

Grundträger

Test der Gesamtcholesterin-Adsorptionskapazität von mit 1-Aminoethyl-3-oxybutyl-Gruppen bzw. alternativ 1-Hydroxyethyl-3-oxybutyl-/Glycidoxypropylgruppen (Verhältnis 1:1) belegten "Glasbeads" (Herstellerbezeichnung $NH_2$- und -OH/Epoxid-hydrophiles Bioranglas, Fa. Schott, Mainz) 100/130/250, Porengröße je nach Spezies 100-120 nm, Korngröße 60 - 280 µm).

**Versuchsdurchführung**

Analog Beispiel 1: In Tabelle 2 sind die Gesamt-Cholesterinbindungseigenschaften aller eingesetzten Ausgangsmaterialien gezeigt.

Tabelle 2: Gesamt-Cholesteringehalt

| | Ausgangs-plasma (mg/dl) | Gemisch der Zwischenelu-ate (mg/dl) | Adsorptions-kapazität (%) |
|---|---|---|---|
| -OH/Epoxid hydrophiles Bioran 100 (Herstellerbezeichnung) | 249 | 225 | 10 |
| -OH/Epoxid hydrophiles Bioran 130 (Herstellerbezeichnung) | 249 | 167 | 32 |
| -OH/Epoxid hydrophiles Bioran 250 (Herstellerbezeichnung) | 217 | 219 | - |
| $-NH_2$-hydrophiles Bioran 100 (Herstellerbezeichnung) | 249 | 90 | 64 |
| $-NH_2$ hydrophi-Bioran 130 (Herstellerbezeichnung) | 249 | 99 | 60les |
| $NH_2$-hydrophiles Bioran 250 (Herstellerbezeichnung) | 249 | 100 | 60 |

Die in Tabelle 2 gezeigten Bindungskapazitäten des Gesamt-Cholesterins liegen für die mit $NH_2$-Gruppen substituierten Bioran "Glasbeads" relativ hoch, diese Spezies adsorbiert jedoch das HDL-Cholesterin quantitativ (Daten nicht gezeigt). Aus diesen Gründen können die $NH_2$ modifizierten "Glasbeads" lediglich für Umsetzungen mit unterschiedlichsten Liganden eingesetzt werden.

Beispiel 3

Grundträger und Säure

Immobilisierung von org. funktionellen Gruppen an Bioran "Glasbeads" sowie Test der Adsorptionskapazität der synthetisierten Adsorptionsmaterialien.

**Adsorbens**

Als Ausgangsprodukt für die Immobilisierungsreaktion wurden "Glasbeads" analog Beispiel 2 eingesetzt (Fa. Schott, Porengröße, Korngröße siehe Bsp. 2), diese werden mit Schwefelsäure umgesetzt. Die Epoxidgruppe wird dabei geöffnet, es entsteht jeweils eine 1,2-Dihydroxypropyl-3-oxypropyl-Funktion.

Je 6 g feuchte Bioran "Glasbeads" 100, 130, 250 (siehe Bsp. 2) mit $-CH_2OH$ Gruppen und Epoxidgruppen (Verhältnis 1:1) werden 3 Tage bei 40°C mit 1 N $H_2SO_4$ geschüttelt (100 rpm). Das Adsorbens wird anschließend mit einer G3 Fritte mit 10 Volumenanteilen destilliertem Wasser gewaschen und im jeweiligen Äquilibrierungspuffer aufgenommen.

**Versuchsdurchführung**

Analog Beispiel 1: In Tabelle 3 sind die Gesamt-Cholesterinbindungseigenschaften einiger synthetisierter Adsorptionsmaterialien gezeigt.

Tabelle 3: Gesamt-Cholesterinbestimmung von Bioran "Glasbeads" Syntheseprodukten

| | Ausgangsplasma (mg/ml) | Gemisch der Zwischeneluate (mg/ml) | Adsorptionskapazität (%) |
|---|---|---|---|
| 1,2-Dihydroxypropyl-3-oxypropyl-Bioran-Disiloxan 100 | 217 | 126 | 42 |
| 1,2-Dihydroxypropyl-3-oxypropyl-Bioran-Disiloxan 130 | 217 | 93 | 57 |
| 1,2-Dihydroxypropyl-3-oxypropyl-Bioran-Disiloxan 250 | 217 | 97 | 55 |

Anmerkung: In der o.a. Tabelle werden die getesteten Materialien lediglich mit der umgesetzten aktiven Gruppe beschrieben. Neben den 1,2-Dihydroxy-3-oxypropylresten sind an die Glasbeads" 1-Hydroxyethyl-3-oxypropylreste und 1,1-Dimethoxyethyl-2-oxypropylreste im Mengenverhältnis (1,3:1:0,8) gebunden (siehe Beispiel 8).

Alle mit der erfindungsgemäßen funktionellen Gruppe belegten Bioran "Glasbeads" zeigen ausgezeichnete Bindungseigenschaften. Die Materialien sind nicht in der Lage, wie das $NH_2$-modif. Bioran "Glasbeads" und das CPG-500 Glas, HDL zu binden (siehe Beispiele 1 und 4).

B e i s p i e l 4

Vergleichende Übersicht einiger klinisch relevanter Parameter am ausgewählten Adsorbensmaterial 1,2-Dihydroxyethyl-3-oxypropyl/1-Hydroxyethyl-3-oxybutyl/1,1-Dimethoxyethyl-2-oxypropyl-Bioran-Disiloxan (Verhältnis 1,3:1:0,8).

In den Tabellen 4 und 5 sind die relevanten klinischen Parameter der oben beschriebenen Bioran-Disiloxanspezies (Verhältnis 1,3:1:0,8) 100/130 gezeigt (siehe Bsp. 1 - 3).

Tabelle 4: 1-Hydroxyethyl-3-oxybutyl/1,2-Dihydroxy-3-oxypropyl/1,1-Dimethoxyethyl-2-oxypropyl-Bioran-Disiloxan (Verhältnis 1:1,3:0,8) 100

| | Ausgangs-plasma (mg/ml) | Gemisch der Zwischenelu-ate (mg/ml) | Adsorptions-kapazität (%) |
|---|---|---|---|
| Gesamt-Cholesterin | 217 | 126 | 42 |
| LDL-Cholesterin | 153 | 66,6 | 56,5 |
| HDL-Cholesterin | 41 | 41 | - |
| Triglyzeride | 117 | 92 | 21,4 |
| Gesamt-Protein | 7 (g/dl) | 6,9 (g/dl) | 1,5 |

Tabelle 5: 1-Hydroxyethyl-3-oxybutyl/1,2-Dihydroxy-3-oxypropyl/1,1-Dimethoxyethyl-2-oxypropyl-Bioran-Disiloxan (Verhältnis 1:1,3:0,8) 130

| | Ausgangs-plasma (mg/ml) | Gemisch der Zwischenelu-ate (mg/ml) | Adsorptions-kapazität (%) |
|---|---|---|---|
| Gesamt-Cholesterin | 217 | 93 | 57 |
| LDL-Cholesterin | 153 | 38,4 | 75 |
| HDL-Cholesterin | 41 | 3[illegible] | 4,9 |
| Triglyzerid | 117 | 78 | 33,3 |
| Gesamt-Protein | 7 (g/dl) | 6,7 (g/dl) | 4,2 |

Die in Beispiel 4 beschriebenen Adsorptionsmaterialien zeigen große Selektivität und Adsorptionskapazität bzgl. LDL-Cholesterin. Weder HDL-Cholesterin noch Gesamt-Eiweiß wird vom Adsorptionsmaterial gebunden. Keines der Kinetikexperimente zeigt nach 6 ml Plasmadurchfluß eine Sättigung des Materials.

Beispiel 5

Test der Adsorptionsselektivität und -kapazität von "Glasbeads" mit 1-Hydroxyethyl-3-oxybutyl-/1,2-Dihydroxy-3-oxypropyl-Bioran-Disiloxan mit Vollblut.

**Adsorbens**

Als Adsorbens wird 1-Hydroxyethyl-3-oxybutyl/1,2-Dihydroxy-3-oxypropyl-Bioran-Disiloxan (Verhältnis 1:1,3) 100/130 mit Vollblut getestet.

**Versuchsdurchführung**

Die Versuchsdurchführung unterscheidet sich lediglich in der Wahl des Vollbluts (stabilisiert mit 3 IE/ml Heparin-Natrium B. Braun Melsungen AG) im Gegensatz zu Beispiel 1 (Plasma mit Heparin stabilisiert).

In Tabelle 6 sind die Ergebnisse des Vollblutexperiments dargestellt.

Tabelle 6: 1-Hydroxy-3-oxybutyl/1,2-Dihydroxy-3-oxypropyl-Bioran-Disiloxan (Verhältnis 1:1,3) 100/130

| | Ausgangs-plasma (mg/ml) | Gemisch der Zwischenelu-ate (mg/ml) | Adsorptions-kapazität (%) |
|---|---|---|---|
| 1-Hydroxyethyl-3-oxybutyl-/1,2-Dihydroxy-3-oxypropyl-Bioran-Disiloxan 100 | 221 | 100 | 55 |
| 1-Hydroxyethyl-3-oxybutyl-/1,2-Dihydroxy-3-oxypropyl-Bioran-Disiloxan 130 | 221 | 70 | 68 |

Die erfindungsgemäß beschriebenen Adsorptionsmaterialien sind in der Lage, weit über 50 % des Gesamt-Cholesterins aus Vollblut zu eliminieren. Beim Passieren des Blutes durch die Säule trat keine Hämolysereaktion auf.

Beispiel 6

Synthese von porösen "Glasbeads" und Test der Adsorptionskapazität der synthetisierten Adsorberspezies mit Humanplasma.

Zu 200 ml demineralisiertem Wasser wurden unter Rühren und pH-Kontrolle mit Glaselektrode 12 ml 3-Glycidoxypropyltrimethoxysilan (Fa. Sigma, Heidelberg) zugetropft, wobei der pH der Mischung durch tropfenweise Zugabe von $10^{-3}$ N KOH zwischen 5,5 und 5,8 gehalten wurde (Verbrauch ca. 30 ml). Es wurde genügend Wasser zugegeben, um die resultierende Lösung 5 %ig zu machen. Die Silylierungsmischung wurde gleich weiterverarbeitet.

25 g natives Bioranglas 100 (Fa. Schott, Porengröße 100 nm, Korngröße 100 µm) wurden im 1-l-Rundkolben mit 200 ml (100 ml) der Silylierungsmischung übergossen und im Wasserstrahlvakuum ca. 1 min unter Schütteln entgast. Anschließend wurde das Gemisch belüftet und möglichst schnell in einem vorgeheizten Ölbad auf 90°C erhitzt (ca. 10 min Aufheizzeit). Es wurde 30 min unter Schwenken bei dieser Temperatur gehalten und dann möglichst schnell abgekühlt, auf einem Büchnertrichter abgenutscht und mit reichlich demineralisiertem Wasser gewaschen. Dann wurde noch 3mal mit je 150 ml Aceton gewaschen und solange genutscht, bis der Rückstand nicht mehr kalt war. Der feine Pulver wurde noch im Vakuum (20 h bei 20 hPa, 24 h bei 2Pa) getrocknet und gewogen. Es resultierten trotz eventueller Umfüllverluste 25 g Glycidoxy-3-propyl-Bioran-Disiloxan 100.

6 g feuchtes Glycidoxy-3-propyl-Bioran-Disiloxan 100 "Glasbeads" wurden 3 Tage bei 40°C mit 1 N $H_2SO_4$ geschüttelt (100 rpm). Das Adorbens wurde anschließend in einer G3 Fritte mit 10 Volumenanteilen destilliertem Wasser gewaschen und im Äquilibrierungspuffer aufgenommen.

## Versuchsdurchführung

Analog Beispiel 1: In Tabelle 7 sind die relevanten klinischen Parameter eines Säulenexperimentes mit Humanplasma mit dem synthetisierten Adsorptionsmedium 1,2-Dihydroxypropyl-3-oxypropyl-Bioran-Disiloxan gezeigt.

**Tabelle 7: Über das Adsorbermaterial 1,2-Dihydroxypropyl-3-oxypropyl-Bioran-Disiloxan passiertes Humanplasma**

| | Ausgangsplasma (mg/ml) | Gemisch der Zwischeneluate (mg/ml) | Adsorptionskapazität (%) |
|---|---|---|---|
| Gesamtcholesterin | 225 | 120 | 46,6 |
| LDL-Cholesterin | 152 | 58 | 61,8 |
| HDL-Cholesterin | 33 | 33 | - |
| Triglyzeride | 115 | 89 | 22,6 |

Wie in Tabelle 7 dokumentiert, zeigt das Adsorptionsmedium ausgezeichnete Selektivitäts- und Adsorptionskapazitätseigenschaften gegenüber den relevanten Lipidparametern.

Beispiel 7

Klinisch-biochemische Routinediagnostik von über poröse "Glasbeads" passierte Humanplasmafraktionen.

## Adsorbens

Über analog Beispiel 3 synthetisiertes Adsorptionsmaterial (Bioran Glasbeads" Porengröße 120 nm, Korngröße 130 µm analog Bsp. 2) mit org. funktionellen Spacerarmen belegt, bestehen aus 1,2-Dihydroxypropyl-3-oxypropyl-, 1-Hydroxyethyl-3-oxypropyl- und 1,1-Dimethoxyethyl-2-oxypropylreste im Verhältnis 1:1, 3:0,8 wird in einem Plasmaexperiment getestet.

## Versuchsdurchführung

Analog Beispiel 1. In Tabelle 8 sind alle relevanten klin.- biochem. Diagnostikparameter der über das Adsorptionsmaterial passierten Plasmafraktionen dargestellt.

Tabelle 8

| | Säulenfraktion | | | | | |
|---|---|---|---|---|---|---|
| | A | 2 | 3 | 4 | 5 | 6 |
| Natrium mmol/l | 143 | 127 | 135 | 139 | 142 | 142 |
| Kalium mmol/l | 4,0 | 3,0 | 3,6 | 3,8 | 3,9 | 3,9 |
| Calcium mg/dl | 9,5 | 8,6 | 8,9 | 8,8 | 9,4 | 9,1 |
| an.Phosphor mg/dl | 3,2 | 3,0 | 3,0 | 3,2 | 3,1 | 3,4 |
| Chlorid mmol/l | 102 | 96 | 100 | 101 | 102 | 102 |
| Kreatinin mg/dl | 1,0 | 0,9 | 0,9 | 1,0 | 1,0 | 0,9 |
| Harnstoff-N mg/dl | 14 | 13 | 14 | 14 | 14 | 15 |
| Glucose mg/dl | 98 | 88 | 90 | 91 | 94 | 94 |
| Ges.Eiweiß g/dl | 6,9 | 6,4 | 6,5 | 6,6 | 6,7 | 7,0 |
| Albumin g/dl | 4,5 | 4,3 | 4,3 | 4,4 | 4,3 | 4,4 |
| Ges.Bilirub. mg/dl | 0,4 | 0,4 | 0,4 | 0,4 | 0,4 | 0,4 |
| LDH U/l | 136 | 132 | 128 | 128 | 129 | 136 |
| Amylase U/l | 21 | 21 | 20 | 20 | 21 | 21 |
| Eisen µg/dl | 100 | 88 | 87 | 87 | 87 | 89 |
| IgG g/l | 12,8 | 12,3 | 12,4 | 12,3 | 12,6 | 12,7 |
| IgA g/l | 2,5 | 2,4 | 2,4 | 2,4 | 2,4 | 2,5 |
| IgM | 1,7 | 1,5 | 1,5 | 1,5 | 1,6 | 1,6 |

| | | | | | | |
|---|---|---|---|---|---|---|
| C-3 Compl. % | 59 | 51 | 49 | 48 | 51 | 53 |
| C-4 Compl. % | 21 | 20 | 19 | 19 | 20 | 21 |
| C-1 inakt. % | 28 | 11 | 21 | 24 | 22 | 21 |
| AT III % | 111 | 104 | 102 | 107 | 101 | 102 |
| Hämoglobin mg/dl | 13 | 10 | 10 | 9 | 10 | 11 |
| Heparin iu/ml | 8,25 | 6,4 | 6,9 | 6,6 | 6,55 | 6,85 |
| Ges.Chol. mg/dl | 196 | 56 | 62 | 62 | 67 | 83 |
| Ges.TG. mg/dl | 69 | 20 | 26 | 32 | 37 | 44 |
| LDL-Chol. mg/dl | 121 | 0 | 0 | 0 | 0 | 11 |
| HDL-Chol. mg/dl | 68 | 56 | 62 | 62 | 62 | 66 |
| Apo A 1 mg/dl | 156 | 146 | 151 | 152 | 150 | 160 |
| Apo B mg/dl | 106 | <20 | <20 | <20 | <20 | <20 |
| Lp(a) mg/dl | 24,5 | 1,85 | 2,0 | 2,65 | 4,1 | 6,6 |
| Fibrinogen mg/dl | 272 | 258 | 231 | 231 | 231 | 258 |
| Plasminogen mg/dl | 18,4 | 12,6 | 17,6 | 18,4 | 18,4 | 19,2 |

A = Ausgangswert
2-6 = Säulenfraktion (in ml)

Die dokumentierten Resultate der Diagnostik belegen die Selektivität und Kapazität des synthetisierten Adsorptionsmaterials.

Beispiel 8

Festkörper NMR-Spektrum des in Beispiel 7 eingesetzten synthetisierten Adsorptionsmaterials.

**Adsorbens/Versuchsdurchführung**

Die vom Hersteller Schott, Mainz als Grundmaterial direkt bezogenen (Bsp. 2), aber auch in Bsp. 3 synthetisierten Bioranträgermaterialien:

A: 1-Hydroxyethyl-3-oxybutyl-Bioran-Disiloxan
B: 1:1 Gemisch 1-Hydroxyethyl-3-oxybutyl/Glycidoxypropyl-Bioran-Disiloxan
C: Gemisch 1-Hydroxyethyl-3-oxybutyl/1,2-Dihydroxypropyl-3-oxypropyl-Bioran-Disiloxan

werden je 0,5 g des bei 50°C/14 Std. getrockneten Proben ein C 13-NMR Spektrum gemessen.

Parameter

| | |
|---|---|
| Gerät: | Bruker AM 400 |
| Meßmethode: | CP/MAS (Cross-Reaction-Magic-Angel-Spinning) |
| Frequenz: | 106,1 MHz |

Scan-Durchgänge: 2743 X
Probenmenge: 0,5 g
Temperatur: 25°C

Die ermittelten Spektren der Verbindungen A/B/C sind in Abb. 1 dargestellt. Alle drei Verbindungen unterscheiden sich in ihren Signalen. Lediglich der Signalpeak bei 21,8 tritt bei allen Proben gleich auf. Er repräsentiert das -C-C-C-O Gerüst. Dieses liegt bei allen Resten (A/B/C) als Grundfunktion zugrunde. Nur das gemäß Beispiel 3 synthetisierte Adsorbermaterial (Probe C) erfüllt die gestellten Qualitätskriterien bzgl. seiner LDL-Bindungskapazität. Das unter C dokumentierte Festkörper NMR-Spektrum kann als Qualitätskriterium für das Adsorbermaterial herangezogen werden.

B e i s p i e l 9

Test der Gesamtcholesterin-Adsorptionskapazität von mit 1-Hydroxyethyl-3-Oxybutyl-/Glycidoxypropylgruppen belegten "Glasbeads" (Herstellerbezeichnung -OH/Epoxid-hydrophiles Bioranglas, Fa. Schott, Mainz), Porengröße je nach Spezies 100 - 120 nm, Korngröße 60 - 280 µm.

**Adsorbens**

Als Ausgangsprodukt für die Synthese werden hydrophile Biorangläser mit verschiedenen OB/Epoxid-Verhältnissen (1:4, 1:1, 3:1) eingesetzt (genaue Produktbezeichnungen siehe Überschrift). Durch die Umsetzung mit Schwefelsäure wandelt sich die Epoxidfunktion in eine 1,2-Dihydroxypropyl-3-Oxypropyl-Funktion (Reaktionsbedingungen, vgl. Beispiel 3).

Die Adsorptionsselektivität und -kapazität bzgl. der Cholesterinadsorption der Bioranspezies mit unterschiedlichen Verhältnissen des 1-Hydroxyethyl-3-Oxybutyl/1,2-Dihydroxypropyl-3-Oxypropyl-Gehaltes an der Bioran-Disiloxanmatrix soll getestet werden.

**Versuchsdurchführung**

Das Adsorbens (Harzvolumen=1,6 ml) wird mit bidestilliertem Wasser über eine G3-Nutsche gewaschen, in eine Einwegchromatographiesäule (5 x 90 mm) gefüllt und anschließend mit 200 ml physiologischem Phosphatpuffer (pH 7,4, 20 mol $PO_4^{3-}$) äquilibriert.

Auf die Säule werden bei Raumtemperatur 22 ml Humanplasma (mit 3 Einheiten Na-Heparin, Fa. B. Braun-Melsungen AG, pro ml Vollblut stabilisiert/Plasmavolumenstrom 0,5 ml/min) gegeben.

Nach 2 ml Voreluat werden 10 Eluate a 1 ml gewonnen, von denen im Vergleich zur Ausgangskonzentration des Plasmas der Gesamtcholesterin-, HDL-, LDL-Gehalt bestimmt wird (Chod-PAP, Chod-Jodid-Test).

Die Ermittlung der Adorptionskapazität erfolgt über die Flächenintegration der adsorbierten Gesamt-, LDL- und HDL-Cholesterinmengen.

Tabelle 9

| | Gesamtcholesterin absolut (mg) | Gesamtcholesterin adsorbiert (mg) | (%) | LDL-Cholesterin absolut (mg) | LDL-Cholesterin adsorbiert (mg) | (%) | HDL-Cholesterin absolut (mg) | HDL-Cholesterin adsorbiert (mg) | (%) |
|---|---|---|---|---|---|---|---|---|---|
| 1-Hydroxyethyl-3-Oxybutyl/1,2-Dihydroxypropyl-3-oxypropyl-Bioran-Disiloxan 100 (Verhält.1:4) | 45,6 | 20 | 43,8 | 30,4 | 10 | 32,9 | 9,6 | 0,8 | 7,8 |
| 1-Hydroxyethyl-3-Oxybutyl/1,2-Dihydroxypropyl-3-oxypropyl-Bioran-Disiloxan 100 (Verhält. 1:1) | 45,6 | 16,6 | 36,4 | 30,4 | 15,1 | 49,8 | 9,6 | - | - |
| 1-Hydroxyethyl-3-Oxybutyl/1,2-Dihydroxypropyl-3-oxypropyl-Bioran Disiloxan 100 (Verhält. 3:1) | 45,6 | 13,4 | 29,3 | 30,4 | 13,9 | 45,8 | 9,6 | - | - |

Die Verhältnisangaben 1:4, 1:1, und 3:1 der 1-Hydroxyethyl-3-Oxybutyl/1,2-Dihydroxypropyl-3-Oxypropyl-Bioran-Disiloxan Proben wurden nicht analytisch bestimmt, sondern aus der Probennomenklatur von den Ausgangsadsorbentien übernommen. Diese OH/Epoxid-Verhältnisse der Ausgangsprodukte wurden jedoch durch spektroskopische Analysen ermittelt (GC-MS/NMR-Techniken)

Die Ergebnisse zeigen, daß die Bindungskapazitäten der adsorbierten Cholesterinmengen von dem Verhältnis der 1-Hydroxyethyl-3-Oxybutyl/1,2-Dihydroxypropyl-3-Oxypropyl-Zusammensetzung abhängig ist. Die Probe mit dem Reaktionsverhältnis (1:1) besitzt die größte LDL-Cholesterinkapazität, ohne daß zusätzlich HDL-Cholesterin gebunden wird.

Die Gesamtcholesterinkapazität der Probe mit dem Verhältnis (1:4) liegt zwar um 7,4 % höher als bei der Probe mit dem Verhältnis (1:1), jedoch wird zusätzlich HDL-Cholesterin gebunden.

Diese zusätzliche HDL-Cholesterinbindungseigenschaft wird zwar bei der Probe mit dem Reaktionsverhältnis (3:1) nicht beobachtet, dafür verringert sich jedoch die Gesamtcholesterinkapazität und somit auch die LDL-Cholesterinbindungskapazität.

Die höchste Adsorptionskapazität mit entsprechender LDL-Cholesterin-Selektivität wird mit dem Reaktionsverhältnis (1:1) erzielt.

B e i s p i e l 10

Synthese von porösen Glasbeads" und Test der Adsorptionskapazität der synthetisierten Adsorberspezies mit Vollblut mit sich anschließender Regeneration.

Synthese der porösen Glasbeads:

Nativer poröser Glasgrieß Trisopor 200 (Fa. VEB Trisola, Steinach, Porengröße 100 nm, Korngröße 100 - 200 µm) werden wie in Beispiel 6 mit der entsprechenden Silanisierungsmischung umgesetzt.

Die 1-Hydroxyethyl-3-Oxypropyl/Glycidoxypropyl-Trisola-Disiloxan 200 (Verhältnis 3:1) "Glasbeads" werden nach der Behandlung mit 1 N $H_2$ $SO_4$ mit destilliertem Wasser gewaschen und mit physiologischem Phosphatpuffer (pH 7,4, 20 mMol $PO_4^{3-}$ ) äquilibriert.

Cholesterinadsorption aus Vollblut mit sich anschließender Regeneration

Als Adsorbens wird das synthetisierte 1-Hydroxyethyl-3-Oxypropyl/ 1,2-Dihydroxypropyl-3-oxypropyl-Trisola-Disiloxan verwendet.

**Versuchsdurchführung**

18 g (Trockengewicht) synthetisiertes Adsorbens werden mit physiologischem Phosphatpuffer (pH 7,4 20 mMol $PO_4^{3-}$) aufgeschwemmt und in ein zylindrisches Gehäuse eingefüllt. Die Vorrichtung besteht aus einem Kunststoffgehäuse (L=25 mm, $D_i$ =38 mm) und weist am zulaufseitigen Deckel ein Sieb mit Porenweite 20 - 100 µm auf. Das Adsorptionsmaterial wird in dem Kunststoffgehäuse mit Phosphatpuffer (s.o.) äquilibriert.

Im Adsorptionstest werden im 1. Lauf und 2. Lauf je 160 ml Vollblut (mit 2 mg EDTA/ml Vollblut stabilisiert) über das Adsorbens gepumpt (Volumenstrom 10 ml/min). Zwischen dem 1. und 2. Lauf erfolgt, nach dem Spülen mit physiologischer Kochsalzlösung, die Regeneration mit 6 M Harnstofflösung (Volumen 120 ml). Vor dem 2. Lauf mit Vollblut wird die Regenerationslösung wiederum mit physiologischer Kochsalzlösung aus der Adsorberkapsel freigespült.

Als Bewertungskriterium für die Regenerierbarkeit des Adsorbens werden die Adsorptionskapazitäten bzgl. Gesamt- bzw. LDL-Cholesterin des 1. und 2. Laufes verglichen. Zusätzlich werden alle relevanten klinisch-biochemischen Diagnostikparameter (incl. Harnstoffbestimmung) der über das Adsorptionsmaterial passierten Vollblutfraktionen (20-ml-Eluate) getestet.

Tabelle 10 Cholesterinadsorption von Trisola-Glasbeads

| | Gesamtcholesterin im Blutpool c (mg/dl) | Gesamtcholesterin absolut in 80 ml Vollblut c (mg) | adsorbiertes Gesamtcholesterin absolut aus 80 ml Vollblut c (mg) | (%) |
|---|---|---|---|---|
| 1. Lauf vor Regeneration | 275 | 220 | 108 | 49,27 |
| 2. Lauf nach Regeneration | 275 | 220 | 109 | 49,86 |
| | **LDL-Cholesterin im Blutpool c (mg/dl)** | **LDL-Cholesterin absolut in 80 ml Vollblut c (mg)** | **adsorbiertes LDL-Cholesterin absolut aus 80 ml Vollblut c (mg)** | **(%)** |
| 1. Lauf vor Regeneration | 175 | 140 | 99 | 69,29 |
| 2. Lauf nach Regeneration | 175 | 140 | 101 | 72,14 |

Das Adsorptionsmaterial 1-Hydroxyethyl-3-Oxypropyl/ 1,2-Dihydroxypropyl-3-Oxypropyl-Trisola-Disiloxan bindet kein HDL-Cholesterin.

In der Regenerationslösung werden Cholesterinmengen nachgewiesen, die Cholesterinadsorptionskapazität des 1. und 2. Laufes mit Vollblut ist identisch, d.h. die 6 M Harnstofflösung eignet sich als Regenerationsagens. Die Blutbildanalytik bestätigt, daß das Adsorptionsmaterial für Vollblut geeignet ist. Die Leukozyten, Erythrocyten- und Thrombozytenwerte sind mit den Werten des Blutpools identisch. Die Differentialbilder der Vollbluteluate des 1. und 2. Adsorptionslaufes zeigen keine Abnormalitäten.

B e i s p i e l 11

Klinisch-biochemische Routinediagnostik von und über poröse "Glasbeads" passierter Vollblutfraktionen

## Adsorbens

Ein analog Beispiel 10 synthetisiertes Adsorptionsmaterial, bestehend aus 1-Hydroxyethyl-3-Oxypropyl/ 1,2-Dihydroxypropyl-3-Oxypropylresten (Verhältnis 3:1) wird mit Vollblut getestet.

**Versuchsdurchführung**

28 g (Trockengewicht) synthetisiertes Adsorptionsmaterial werden im Äquilibrierungspuffer aufgeschlemmt, in eine zylindrische Kunststoffvorrichtung mit Deckel- und Siebverschluß (L=49 mm, $D_i$=36 mm) gefüllt und äquilibriert. 400 ml Vollblut (mit 2 mg EDTA/ml Vollblut stabilisiert) werden mit dem Blutvolumenstrom von 16 ml/min über das Adsorptionsmaterial gepumpt.

Für die klinische Routineanalytik werden nach 100 ml Voreluat 20 ml Vollbluteluate gewonnen.

Tabelle 11

siehe Anlage

Die Ergebnisse der Blutbildanalytik (Tabelle 12) bestätigen die Biokompatibilität des Adsorptionsmaterials.

Die in der Tabelle 11 dokumentierten Resultate der klinischen Routineanalytik belegen sowohl die Selektivität als auch die Kapazität des synthetisierten Adsorptionsmaterials.

Tabelle 11

| | Konzentration | Angaben in ml<br>Anfangswert | 100-200 | 140-160 | 180-200 | 260-280 | 320-340 | 380-400 |
|---|---|---|---|---|---|---|---|---|
| Natrium | mmol/l | 143 | 145 | 143 | 143 | 142 | 142 | 141 |
| Chlorid | mmol/l | 98 | 101 | 98 | 98 | 99 | 99 | 99 |
| Ges.Eiweiß | g/dl | 7,2 | 6,5 | 7,2 | 6,9 | 6,9 | 7,3 | 7,2 |
| Ges.Chol. | mg/dl | 193 | 43 | 59 | 65 | 78 | 94 | 105 |
| Triglyceride | mg/dl | 101 | 41 | 53 | 58 | 64 | 70 | 80 |
| HDL-Chol. | mg/dl | 49 | 38 | 48 | 50 | 48 | 51 | 49 |
| LDL-Chol. | mg/dl | 124 | 0 | 0 | 3 | 17 | 29 | 56 |
| IgG | mg/dl | 10,8 | 10 | 11,3 | 11,2 | 11,1 | 10,6 | 11,1 |
| IgA | mg/dl | 2,3 | 2,2 | 2,5 | 2,4 | 2,4 | 2,4 | 2,4 |
| IgM | mg/dl | 2 | 1,7 | 2,1 | 2 | 2 | 2,1 | 2 |
| C-1 Compl. | mg/dl | 29 | 19 | 23 | 25 | 25 | 24 | 26 |
| C-3 Compl. | mg/dl | 61 | 53 | 64 | 64 | 64 | 61 | 59 |
| C-4 Compl. | mg/dl | 21 | 18 | 20 | 20 | 21 | 20 | 20 |
| Fibrinogen | mg/dl | 109 | 109 | 107 | 110 | 107 | 106 | 108 |
| AT III | % | 11,1 | 11 | 11,2 | 11,9 | 11,3 | 12,2 | 11 |
| Plasminogen | % | 13,2 | 10,6 | 11,2 | 11,8 | 11,8 | 11,2 | 11,8 |
| Lp (a) | mg/dl | 75 | 4,5 | 9 | 12,3 | 23 | 31,4 | 39,8 |
| Apo A1 | mg/dl | 172 | 122 | 172 | 176 | 179 | 178 | 183 |
| Apo B | mg/dl | 78,8 | 3,83 | 11,2 | 19 | 40,7 | 59,7 | 77 |

Tabelle 12

| | | Angaben in ml | | | | | | |
|---|---|---|---|---|---|---|---|---|
| | Konzentration | Anfangswert | 100-200 | 140-160 | 180-200 | 260-280 | 320-340 | 380-400 |
| Leukoz. | Anzahl µl | 4000 | 3800 | 4100 | 4100 | 4100 | 4100 | 4100 |
| Erythr. | Mill/µl | 5,01 | 4,85 | 5,07 | 5.01 | 5,07 | 5,01 | 4,93 |
| Hb | g | 15,2 | 14,5 | 15,2 | 15,2 | 15,3 | 15,2 | 15,1 |
| HK | Vol.% | 43,8 | 42,1 | 44,9 | 43,9 | 44 | 43,4 | 43,4 |
| Thromboz. | Anzahl/nl | 272 | 262 | 281 | 286 | 283 | 280 | 274 |
| Lymphoz. | % | 47 | 45 | 36 | 37 | 45 | 48 | 39 |
| Segmentk. | % | 48 | 54 | 61 | 55 | 52 | 45 | 57 |
| Stabk. | % | | | | | | 5 | 3 |
| Monoz. | % | 4 | 1 | 2 | 6 | 3 | 2 | 1 |
| Eossino.ph. | % | 1 | | 1 | 2 | | | |
| Basoph. | % | | | | | | | |
| atyp.Zellen | % | | | | | | | |

## Patentansprüche

### Patentansprüche für folgende Vertragsstaaten : AT, BE, CH, LI, DE, DK, FR, GB, IT, NL, SE

1. Adsorptionsmaterial zur selektiven Entfernung von Lp(a)- Lipoprotein, LDL- oder/und vLDL- Cholesterin aus wässrigen Flüssigkeiten, insbesondere aus Blut, Plasma oder Serum, bestehend aus porösen Glaskörpern als festem Trägermaterial mit über an deren Oberfläche vorhandene Silanolgruppen kovalent gebundenen organischen funktionellen Gruppen als Liganden,
**dadurch gekennzeichnet,**
daß es als Liganden mindestens eine Ethergruppierung mit einer endständigen $\alpha,\beta$-Diolgruppe enthaltende Alkylreste mit 4 bis 12 C-Atomen aufweist und keine freien Silanolgruppen vorhanden sind.

2. Adsorptionsmaterial nach Anspruch 1,
**dadurch gekennzeichnet,**
daß die Liganden der allgemeinen Formel

$$-(CH_2)_x - O - (CH_2)_y - \underset{\displaystyle OH}{\underset{|}{CH}} - CH_2OH \qquad (I)$$

entsprechen, in der
x und y ganze Zahlen von 1 bis 5 bedeuten.

3. Adsorptionsmaterial nach Anspruch 1 oder 2,
**dadurch gekennzeichnet,**
daß es als Liganden 1-Aminoethyl-3-oxypropyl-Reste enthält.

4. Adsorptionsamterial nach einem der vorhergehenden Ansprüche,
**dadurch gekennzeichnet,**
daß es als weitere Liganden Reste der allgemeinen Formel
$$- (CH_2)_x - O - (CH_2)_y - CH_2 - OH \qquad (II)$$
enthält, worin x und y ganze Zahlen von 1 bis 5 bedeuten.

5. Adsoprtionsmaterial nach Anspruch 4,
**dadurch gekennzeichnet,**
daß es als Liganden der Formel II einen oder mehrere 1- Hydroxyethyl-3-oxybutyl-Reste enthält.

6. Adsorptionsmaterial nach Anspruch 4,
**dadurch gekennzeichnet,**
daß es als Liganden einen oder mehrere 1-Hydroxypropyl- 3-oxypropyl-Reste enthält.

7. Adsorptionsmaterial nach einem der vorhergehenden Ansprüche,
**dadurch gekennzeichnet,**
daß es als weitere Liganden Reste der allgemeinen Formel
$$- (CH_2)_x - O - (CH_2)_y - CR_1R_2R_3 \qquad (III)$$
enthält, wobei
$R_1$ einen Methoxyrest und
$R_2$ und $R_3$ H oder einen Methoxyrest und
x und y ganze Zahlen von 1 bis 5 bedeuten.

8. Adsorptionsmaterial nach Anspruch 7,
**dadurch gekennzeichnet,**
daß es als Liganden der Formel III einen oder mehrere 1,1-Dimethoxyethyl-3-oxypropyl-Reste enthält.

**9.** Adsorptionsmaterial nach einem der vorhergehenden Ansprüche,
**dadurch gekennzeichnet,**
daß die Liganden der Formeln I, II und III in einem Mengenverhältnis etwa von 1,3 : 1 : 0,8 an das Trägermaterial über die Silanolgruppen gebunden vorhanden sind.

**10.** Adsorptionsmaterial nach einem der vorhergehenden Ansprüche,
**dadurch gekennzeichnet,**
daß die Liganden der Formeln I und II in einem Mengen verhältnis von 1:1, 1:2, 1:3 und 1:4 sowie 2:1, 3:1 und 4:1 an das Trägermaterial über die Silanolgruppen gebunden vorhanden sind.

**11.** Adsorptionsmaterial nach einem der vorhergehenden Ansprüche,
**dadurch gekennzeichnet,**
daß es eine Oberfläche von 30 bis 300 $m^2/g$ aufweist.

**12.** Adsorptionsmaterial nach einem der vorhergehenden Ansprüche,
**dadurch gekennzeichnet,**
daß der Belegungsgrad des Trägermaterials mit Liganden 2 bis 20 $\mu mol/m^2$ beträgt.

**13.** Adsorptionsmaterial nach einem der vorhergehenden Ansprüche,
**dadurch gekennzeichnet,**
daß die Glasbeads einen Korndurchmesser von 60 bis 500 µm und einen Porendurchmesser von 50 bis 350 nm aufweisen.

**14.** Verfahren zur Entfernung von LDL- oder/und vLDL-Cholesterin oder/und Lp(a)-Lipoprotein aus wäßrigen Flüssigkeiten, insbesondere aus Blut, Plasma oder Serum,
**dadurch gekennzeichnet,**
daß man die Flüssigkeit über ein Adsorptionsmaterial nach einem der Ansprüche 1 bis 12 leitet.

**15.** Verfahren zur Bestimmung der Konzentration von LDL-oder/und vLDL-Cholesterin oder/und Lp(a)-Lipoprotein in wäßrigen Flüssigkeiten, insbesondere Blut, Plasma oder Serum,
**dadurch gekennzeichnet,**
daß man mit Hilfe eines Adsorptionsmaterials nach einem der Ansprüche 1 bis 12 LDL- und vLDL-Cholesterin und Lp(a)-Lipoprotein chromatographisch abtrennt und nach Elution vom Adsorptionsmaterial ihre Konzentration nach an sich bekannnten Methoden bestimmt.

**16.** Verfahren nach Anspruch 15,
**dadurch gekennzeichnet,**
daß man die Elution mit hochmolekularer Kochsalzlösung, einem Glycerin-Wasser-Gemisch oder einer Harnstoff-Lösung durchführt.

**17.** Vorrichtung zur extrakorporalen Entfernung von LDL- oder/und vLDL-Cholesterin oder/und Lp(a)-Lipoprotein aus wäßrigen Flüssigkeiten, insbesondere Blut, Plasma oder Serum,
**dadurch gekennzeichnet,**
daß sie aus einem zylindrischen Gehäuse besteht, das mit einem Adsorptionsmaterial nach einem der Ansprüche 1 bis 12 gefüllt ist und an seinen stirnseitigen Enden mit Deckeln versehen ist, die jeweils einen zentralen Zu- bzw. Ablaufstutzen aufweisen.

**18.** Vorrichtung nach Anspruch 17,
**dadurch gekennzeichnet,**
daß das Gehäuse einen Durchmesser von 3 bis 20 cm, vorzugsweise 5 bis 10 cm, und eine Länge von 1 bis 40 cm, vorzugsweise 10 bis 20 cm aufweist.

**19.** Vorrichtung nach Anspruch 17 oder 18,
**dadurch gekennzeichnet,**
daß das Gehäuse aus Glas oder Kunststoff besteht.

**20.** Vorrichtung nach einem der Ansprüche 17, 18 oder 19,
**dadurch gekennzeichnet,**
daß das Gehäuse am zulaufseitigen Deckel ein Sieb mit Porenweite 10 bis 300 µm, vorzugsweise 20 bis

100 µm aufweist.

21. Vorrichtung nach einem der Ansprüche 17 bis 20, **dadurch gekennzeichnet**, daß das Gehäuse in einen geschlossenen Kreislauf integriert ist, in dem die Flüssigkeit mittels einer Pumpe zirkuliert wird.

22. Vorrichtung nach einem der Ansprüche 17 bis 21, **dadurch gekennzeichnet**, daß sich in dem Kreislauf ein weiteres mit dem Adsorptionsmaterial gefülltes und mit Deckeln mit Zu- bzw. Ablaufstutzen versehenes zylindrischen Gehäuse befindet.

**Patentansprüche für folgenden Vertragsstaat : ES**

1. Verfahren zur Herstellung eines Adsorptionsmaterials zur selektiven Entfernung von Lp(a)- Lipoprotein, LDL-oder/und vLDL- Cholesterin aus wässrigen Flüssigkeiten, insbesondere aus Blut, Plasma oder Serum, bestehend aus porösen Glaskörpern als festem Trägermaterial mit über an deren Oberfläche vorhandene Silanolgruppen kovalent gebundenen organischen funktionellen Gruppen als Liganden, **dadurch gekennzeichnet**, daß das Adsorptionsmaterial als Liganden mindestens eine Ethergruppierung mit einer endständigen α,β-Diolgruppe enthaltende Alkylreste mit 4 bis 12 C-Atomen aufweist und keine freien Silanolgruppen vorhanden sind, wobei die gewünschten Liganden mittels einer Silierungsreaktion über eine Disiloxan-Bindung -Si-O-Si-L, wobei L den Liganden bedeutet, an die SiOH-Gruppen der Glaskörper gekoppelt werden.

2. Verfahren nach Anspruch 1, **dadurch gekennzeichnet**, daß die Liganden der allgemeinen Formel

$$-(CH_2)_x - O - (CH_2)_y - \underset{\displaystyle OH}{\underset{|}{CH}} - OH \qquad (I)$$

entsprechen, in der x und y ganze Zahlen von 1 bis 5 bedeuten.

3. Verfahren nach Anspruch 1 oder 2, **dadurch gekennzeichnet**, daß das Adsorptionsmaterial als Liganden 1-Aminoethyl-3- oxypropyl-Reste enthält.

4. Verfahren nach einem der vorhergehenden Ansprüche, **dadurch gekennzeichnet**, daß das Adsorptionsmaterial als weitere Liganden Reste der allgemeinen Formel

$$-(CH_2)_x - O - (CH_2)_y - CH_2 - OH \qquad (II)$$

enthält, worin x und y ganze Zahlen von 1 bis 5 bedeuten.

5. Verfahren nach Anspruch 4, **dadurch gekennzeichnet,** daß das Adsorptionsmaterial als Liganden der Formel II einen oder mehrere 1-Hydroxyethyl-3-oxybutyl-Reste enthält.

6. Verfahren nach Anspruch 4, **dadurch gekennzeichnet,** daß das Adsorptionsmaterial als Liganden einen oder mehrere 1-Hydroxypropyl-3-oxypropyl-Reste enthält.

7. Verfahren nach einem der vorhergehenden Ansprüche, **dadurch gekennzeichnet,** daß das Adsorptionsmaterial als weitere Liganden Reste der allgemeinen Formel

$$- (CH_2)_x - O - (CH_2)_y - CR_1R_2R_3 \qquad (III)$$

enthält, wobei
$R_1$ einen Methoxyrest und
$R_2$ und $R_3$ H oder einen Methoxyrest und
x und y ganze Zahlen von 1 bis 5 bedeuten.

**8.** Verfahren nach Anspruch 7,
**dadurch gekennzeichnet,**
daß das Adsorptionsmaterial als Liganden der Formel III einen oder mehrere 1,1-Dimethoxyethyl-3-oxypropyl-Reste enthält.

**9.** Verfahren nach einem der vorhergehenden Ansprüche,
**dadurch gekennzeichnet,**
daß die Liganden der Formeln I, II und III in einem Mengenverhältnis etwa von 1,3 : 1 : 0,8 an das Trägermaterial über die Silanolgruppen gebunden vorhanden sind.

**10.** Verfahren nach einem der vorhergehenden Ansprüche,
**dadurch gekennzeichnet,**
daß die Liganden der Formeln I und II in einem Mengenverhältnis von 1:1, 1:2, 1:3 und 1:4 sowie 2:1, 3:1 und 4:1 an das Trägermaterial über die Silanolgruppen gebunden vorhanden sind.

**11.** Verfahren nach einem der vorhergehenden Ansprüche,
**dadurch gekennzeichnet,**
daß das Adsorptionsmaterial eine Oberfläche von 30 bis 300 $m^2/g$ aufweist.

**12.** Verfahren nach einem der vorhergehenden Ansprüche,
**dadurch gekennzeichnet,**
daß der Belegungsgrad des Trägermaterials mit Liganden 2 bis 20 $\mu mol/m^2$ beträgt.

**13.** Verfahren nach einem der vorhergehenden Ansprüche,
**dadurch gekennzeichnet,**
daß die Glasbeads einen Korndurchmesser von 60 bis 500 $\mu m$ und einen Porendurchmesser von 50 bis 350 nm aufweisen.

**14.** Verfahren zur Entfernung von LDL- oder/und vLDL-Cholesterin oder/und Lp(a)-Lipoprotein aus wäßrigen Flüssigkeiten, insbesondere aus Blut, Plasma oder Serum,
**dadurch gekennzeichnet,**
daß man die Flüssigkeit über ein nach einem der Ansprüche 1 bis 12 hergestelltes Adsorptionsmaterial leitet.

**15.** Verfahren zur Bestimmung der Konzentration von LDL-oder/und vLDL-Cholesterin oder/und Lp(a)-Lipoprotein in wäßrigen Flüssigkeiten, insbesondere Blut, Plasma oder Serum,
**dadurch gekennzeichnet,**
daß man mit Hilfe eines nach einem der Ansprüche 1 bis 12 hergestellten Adsorptionsmaterials LDL- und vLDL-Cholesterin und Lp(a)-Lipoprotein chromatographisch abtrennt und nach Elution vom Adsorptionsmaterial ihre Konzentration nach an sich bekannnten Methoden bestimmt.

**16.** Verfahren nach Anspruch 15,
**dadurch gekennzeichnet,**
daß man die Elution mit hochmolekularer Kochsalzlösung, einem Glycerin-Wasser-Gemisch oder einer Harnstoff-Lösung durchführt.

**17.** Vorrichtung zur extrakorporalen Entfernung von LDL-oder/und vLDL-Cholesterin oder/und Lp(a)-Lipoprotein aus wäßrigen Flüssigkeiten, insbesondere Blut, Plasma oder Serum,
**dadurch gekennzeichnet,**
daß sie aus einem zylindrischen Gehäuse besteht, das mit einem nach einem der Ansprüche 1 bis 12 hergestellten Adsorptionsmaterial gefüllt ist und an seinen stirnseitigen Enden mit Deckeln versehen ist, die jeweils einen zentralen Zu- bzw. Ablaufstutzen aufweisen.

18. Vorrichtung nach Anspruch 17,
**dadurch gekennzeichnet,**
daß das Gehäuse einen Durchmesser von 3 bis 20 cm, vor zugsweise 5 bis 10 cm, und eine Länge von 1 bis 40 cm, vorzugsweise 10 bis 20 cm aufweist.

19. Vorrichtung nach Anspruch 17 oder 18,
**dadurch gekennzeichnet,**
daß das Gehäuse aus Glas oder Kunststoff besteht.

20. Vorrichtung nach einem der Ansprüche 17, 18 oder 19,
**dadurch gekennzeichnet,**
daß das Gehäuse am zulaufseitigen Deckel ein Sieb mit Porenweite 10 bis 300 µm, vorzugsweise 20 bis 100 µm aufweist.

21. Vorrichtung nach einem der Ansprüche 17 bis 20,
**dadurch gekennzeichnet,**
daß das Gehäuse in einen geschlossenen Kreislauf integriert ist, in dem die Flüssigkeit mittels einer Pumpe zirkuliert wird.

22. Vorrichtung nach einem der Ansprüche 17 bis 21,
**dadurch gekennzeichnet,**
daß sich in dem Kreislauf ein weiteres mit dem Adsorptionsmaterial gefülltes und mit Deckeln mit Zu- bzw. Ablaufstutzen versehenes zylindrischen Gehäuse befindet.

## Claims

**Claims for the following Contracting States : AT, BE, CH, LI, DE, DK, FR, GB, IT, NL, SE**

1. Adsorbent material for the selective removal of Lp(a) lipoprotein, LDL cholesterol or/and vLDL cholesterol from aqueous liquids, in particular from blood, plasma or serum, consisting of porous glass bodies as the solid carrier material with organic functional groups as ligands which are covalently bound via silanol groups present on their surface,
**wherein**
it has alkyl residues with 4 to 12 C atoms containing at least one ether group and a terminal α,β-diol group as the ligands and no free silanol groups are present.

2. Adsorbent material as claimed in claim 1,
**wherein**
the ligands correspond to the general formula

$$-(CH_2)_x - O - (CH_2)_y - \underset{\displaystyle OH}{\underset{|}{CH}} - CH_2OH \qquad (I)$$

in which
x and y denote integers from 1 to 5.

3. Adsorbent material as claimed in claim 1 or 2,
**wherein**
it contains 1-aminoethyl-3-oxypropyl residues as the ligands.

4. Adsorbent material as claimed in one of the previous claims,
**wherein**
it contains residues of the general formula

$$-(CH_2)_x - O - (CH_2)_y - CH_2 - OH \qquad (II)$$

as further ligands in which x and y denote integers from 1 to 5.

5. Adsorbent material as claimed in claim 4,
**wherein**
it contains one or several 1-hydroxyethyl-3-oxybutyl residues as the ligands of formula II.

6. Adsorbent material as claimed in claim 4,
**wherein**
it contains one or several 1-hydroxypropyl-3-oxypropyl residues as ligands.

7. Adsorbent material as claimed in one of the previous claims,
**wherein**
it contains residues having the general formula

$$-(CH_2)_x - O - (CH_2)_y - CR_1R_2R_3 \qquad (III)$$

as further ligands in which
$R_1$ denotes a methoxy residue and
$R_2$ and $R_3$ denote H or a methoxy residue and
x and y denote integers from 1 to 5.

8. Adsorbent material as claimed in claim 7,
**wherein**
it contains one or several 1,1-dimethoxyethyl-3-oxypropyl residues as the ligands of formula III.

9. Adsorbent material as claimed in one of the previous claims,
**wherein**
the ligands having the formulae I, II and III are present bound to the carrier material via silanol groups in a quantity ratio of about 1.3 : 1 : 0.8.

10. Adsorbent material as claimed in one of the previous claims,
**wherein**
the ligands having the formulae I and II are present bound to the carrier material via silanol groups in a quantity ratio of 1:1, 1:2, 1:3 and 1:4 as well as 2:1, 3:1 and 4:1.

11. Adsorbent material as claimed in one of the previous claims,
**wherein**
it has a surface of 30 to 300 $m^2/g$.

12. Adsorbent material as claimed in one of the previous claims,
**wherein**
the degree of coating of the carrier material with ligands is 2 to 20 $\mu mol/m^2$.

13. Adsorbent material as claimed in one of the previous claims,
**wherein**
the glass beads have a particle diameter of 60 to 500 $\mu m$ and a pore diameter of 50 to 350 nm.

14. Process for the removal of LDL cholesterol or/and vLDL cholesterol or/and Lp(a) lipoprotein from aqueous liquids, in particular from blood, plasma or serum,
**wherein**
the liquid is passed over an adsorbent material as claimed in one of the claims 1 to 12.

15. Method for the determination of the concentration of LDL cholesterol or/and vLDL cholesterol or/and Lp(a) lipoprotein in aqueous liquids, in particular blood, plasma or serum,
**wherein**
LDL cholesterol and vLDL cholesterol and Lp(a) lipoprotein is separated chromatographically with the aid of an adsorbent material as claimed in one of the claims 1 to 12 and after elution from the adsorbent material their concentrations are determined according to known methods.

16. Method as claimed in claim 15,
**wherein**
the elution is carried out with high molecular saline solution, a glycerol-water mixture or a urea solution.

17. Device for the extracorporeal removal of LDL cholesterol or/and vLDL cholesterol or/and Lp(a) lipoprotein

from aqueous liquids, in particular blood, plasma or serum,
**wherein**
it consists of a cylindrical housing which is filled with an adsorbent material as claimed in one of the claims 1 to 12 and which is provided with covers at it's front ends which each have a central inlet or outlet pipe.

**18.** Device as claimed in claim 17,
**wherein**
the housing has a diameter of 3 to 20 cm, preferably 5 to 10 cm and a length of 1 to 40 cm, preferably 10 to 20 cm.

**19.** Device as claimed in claim 17 or 18,
**wherein**
the housing is made of glass or plastic.

**20.** Device as claimed in one of the claims 17, 18 or 19,
**wherein**
the cover of the housing at the inflow side has a sieve with a pore size of 10 to 300 µm, preferably 20 to 100 µm.

**21.** Device as claimed in one of the claims 17 to 20,
**wherein**
the housing is integrated into a closed circulation in which the liquid is circulated by means of a pump.

**22.** Device as claimed in one of the claims 17 to 21,
**wherein**
a further cylindrical housing filled with the adsorbent material and provided with covers with inlet and outlet pipes is located in the circulation.

**Claims for the following Contracting State : ES**

**1.** Process for the production of an adsorbent material for the selective removal of Lp(a) lipoprotein, LDL cholesterol or/and vLDL cholesterol from aqueous liquids, in particular from blood, plasma or serum, consisting of porous glass bodies as the solid carrier material with organic functional groups as ligands which are covalently bound via silanol groups present on their surface,
**wherein**
the adsorbent material has alkyl residues with 4 to 12 C atoms containing at least one ether group and a terminal α,β-diol group as the ligands and no free silanol groups are present whereby the desired ligands are coupled by means of a silylation reaction via a disiloxane bond -Si-O-Si-L, in which L denotes the ligands, to the SiOH groups of the glass bodies.

**2.** Process as claimed in claim 1,
**wherein**
the ligands correspond to the general formula

$$-(CH_2)_x - O - (CH_2)_y - \underset{\underset{OH}{|}}{CH} - OH \qquad (I)$$

in which
x and y denote integers from 1 to 5.

**3.** Process as claimed in claim 1 or 2,
**wherein**
the adsorbent material contains 1-aminoethyl-3-oxypropyl residues as ligands.

**4.** Process as claimed in one of the previous claims,
**wherein**

the adsorbent material contains residues of the general formula

$$-(CH_2)_x - O - (CH_2)_y - CH_2 - OH \qquad (II)$$

as further ligands in which x and y denote integers from 1 to 5.

5. Process as claimed in claim 4,
**wherein**
the adsorbent material contains one or several 1-hydroxyethyl-3-oxybutyl residues as the ligands of formula II.

6. Process as claimed in claim 4,
**wherein**
the adsorbent material contains one or several 1-hydroxypropyl-3-oxypropyl residues as ligands.

7. Process as claimed in one of the previous claims,
**wherein**
the adsorbent material contains residues having the general formula

$$-(CH_2)_x - O - (CH_2)_y - CR_1R_2R_3 \qquad (III)$$

as further ligands in which
$R_1$ denotes a methoxy residue and
$R_2$ and $R_3$ denote H or a methoxy residue and
x and y denote integers from 1 to 5.

8. Process as claimed in claim 7,
**wherein**
the adsorbent material contains one or several 1,1-dimethoxyethyl-3-oxypropyl residues as the ligands of formula III.

9. Process as claimed in one of the previous claims,
**wherein**
the ligands having the formulae I, II and III are present bound to the carrier material via silanol groups in a quantity ratio of about 1.3 : 1 : 0.8.

10. Process as claimed in one of the previous claims,
**wherein**
the ligands having the formulae I and II are present bound to the carrier material via silanol groups in a quantity ratio of 1:1, 1:2, 1:3 and 1:4 as well as 2:1, 3:1 and 4:1.

11. Process as claimed in one of the previous claims,
**wherein**
the adsorbent material has a surface of 30 to 300 $m^2/g$.

12. Process as claimed in one of the previous claims,
**wherein**
the degree of coating of the carrier material with ligands is 2 to 20 $\mu mol/m^2$.

13. Process as claimed in one of the previous claims,
**wherein**
the glass beads have a particle diameter of 60 to 500 $\mu m$ and a pore diameter of 50 to 350 nm.

14. Process for the removal of LDL cholesterol or/and vLDL cholesterol or/and Lp(a) lipoprotein from aqueous liquids, in particular from blood, plasma or serum,
**wherein**
the liquid is passed over an adsorbent material as claimed in one of the claims 1 to 12.

15. Method for the determination of the concentration of LDL cholesterol or/and vLDL cholesterol or/and Lp(a) lipoprotein in aqueous liquids, in particular blood, plasma or serum,
**wherein**
LDL cholesterol and vLDL cholesterol and Lp(a) lipoprotein is separated chromatographically with the aid of an adsorbent material produced as claimed in one of the claims 1 to 12 and after elution from the adsorbent material their concentrations are determined according to known methods.

16. Method as claimed in claim 15,
**wherein**
the elution is carried out with high molecular saline solution, a glycerol-water mixture or a urea solution.

17. Device for the extracorporeal removal of LDL cholesterol or/and vLDL cholesterol or/and Lp(a) lipoprotein from aqueous liquids, in particular blood, plasma or serum,
**wherein**
it consists of a cylindrical housing which is filled with an adsorbent material produced as claimed in one of the claims 1 to 12 and which is provided with covers at it's front ends which each have a central inlet or outlet pipe.

18. Device as claimed in claim 17,
**wherein**
the housing has a diameter of 3 to 20 cm,
preferably 5 to 10 cm and a length of 1 to 40 cm,
preferably 10 to 20 cm.

19. Device as claimed in claim 17 or 18,
**wherein**
the housing is made of glass or plastic.

20. Device as claimed in one of the claims 17, 18 or 19,
**wherein**
the cover of the housing at the inflow side has a sieve with a pore size of 10 to 300 µm, preferably 20 to 100 µm.

21. Device as claimed in one of the claims 17 to 20,
**wherein**
the housing is integrated into a closed circulation in which the liquid is circulated by means of a pump.

22. Device as claimed in one of the claims 17 to 21,
**wherein**
a further cylindrical housing filled with the adsorbent material and provided with covers with inlet and outlet pipes is located in the circulation.

## Revendications

## Revendications pour les Etats contractants suivants : AT, BE, CH, LI, DE, DK, FR, GB, IT, NL, SE

1. Matière adsorbante pour l'élimination sélective de la lipoprotéine Lp(a), de LDL et/ou de VLDL cholestérol de liquides aqueux, en particulier de sang, de plasma ou de sérum, constituée par des corps en verre poreux en tant que matière support solide, avec des groupes fonctionnels organiques comme ligands liés de façon covalente par l'intermédiaire de groupes silanols présents à leur surface, caractérisée en ce qu'elle comporte comme ligands des restes alkyle de 4 à 12 atomes de carbone contenant au moins un groupement éther avec un groupe α,β-diol terminal et en ce qu'il n'y a pas de groupes silanol libres.

2. Matière adsorbante selon la revendication 1, caractérisée en ce que les ligands correspondent à la formule générale

$$-(CH_2)_x-O-(CH_2)_y-\underset{\displaystyle OH}{\underset{|}{CH}}-CH_2OH \qquad (I)$$

dans laquelle x et y représentent des nombres entiers de 1 à 5.

3. Matière adsorbante selon la revendication 1 ou 2, caractérisée en ce qu'elle contient comme ligands des restes 1-aminoéthyl-3-oxypropyle.

4. Matière adsorbante selon l'une des revendications précédentes, caractérisée en ce qu'elle contient comme autres ligands des restes de formule générale

$$-(CH_2)_x - O - (CH_2)_y - CH_2OH \qquad (II)$$

dans laquelle x et y représentent des nombres entiers de 1 à 5.

5. Matière adsorbante selon la revendication 4, caractérisée en ce qu'elle contient comme ligands de formule II un ou plusieurs restes 1-hydroxyéthyl-3-oxybutyle.

6. Matière adsorbante selon la revendication 4, caractérisée en ce qu'elle contient comme ligands un ou plusieurs restes 1-hydroxypropyl-3-oxypropyle.

7. Matière adsorbante selon l'une des revendications précédentes, caractérisée en ce qu'elle contient comme autres ligands des restes de formule générale

$$-(CH_2)_x\text{-}O\text{-}(CH_2)_y\text{-}C\ R_1\ R_2\ R_3 \qquad (III)$$

dans laquelle $R_1$ représente un reste méthoxy et
$R_2$ et $R_3$ représentent H ou un groupe méthoxy et
x et y représentent des nombres entiers de 1 à 5.

8. Matière adsorbante selon la revendication 7, caractérisée en ce qu'elle contient comme ligands de formule III un ou plusieurs restes 1,1-diméthoxyéthyl-3-oxypropyle.

9. Matière adsorbante selon l'une des revendications précédentes, caractérisée en ce que les ligands de formule I, II et III sont liés à la matière support en une proportion d'environ 1,3 : 1: 0,8 par l'intermédiaire des groupes silanol.

10. Matière adsorbante selon l'une des revendications précédentes, caractérisée en ce que les ligands de formule I et II sont liés à la matière support en une proportion de 1:1, 1:2, 1:3 et 1:4 ainsi que de 2:1, 3:1 et 4:1 par l'intermédiaire des groupes silanol.

11. Matière adsorbante selon l'une des revendications précédentes, caractérisée en ce qu'elle présente une surface de 30 à 300 $m^2/g$.

12. Matière adsorbante selon l'une des revendications précédentes, caractérisée en ce que le degré de recouvrement de la matière support par les ligands est de 2 à 20 $\mu$moles/$m^2$.

13. Matière adsorbante selon l'une des revendications précédentes, caractérisée en ce que les perles de verre ont un diamètre de grains de 60 à 500 $\mu$m et un diamètre de pores de 50 à 350 nm.

14. Procédé d'élimination de LDL et/ou de VLDL cholestérol et/ou de lipoprotéine Lp(a) de liquides aqueux, en particulier de sang, de plasma ou de sérum, caractérisé en ce que l'on fait passer le liquide sur une matière adsorbante selon l'une des revendications 1 à 12.

15. Procédé de détermination de la concentration de LDL et/ou de VLDL cholestérol et/ou de lipoprotéine Lp(a) dans des liquides aqueux, en particulier du sang, du plasma ou du sérum, caractérisé en ce que l'on sépare par chromatographie le LDL et le VLDL cholestérol et la lipoprotéine Lp(a) à l'aide d'une matière adsorbante selon l'une des revendications 1 à 12 et que, après élution de la matière adsorbante, on détermine leur concentration par des méthodes connues en soi.

16. Procédé selon la revendication 15, caractérisé en ce que l'on réalise l'élution avec une solution de chlorure de sodium de masse moléculaire élevée, un mélange de glycérol et d'eau ou une solution d'urée.

17. Dispositif pour l'élimination extracorporelle de LDL et/ou de VLDL cholestérol et/ou de lipoprotéine Lp(a) de liquides aqueux, en particulier de sang, de plasma ou de sérum, caractérisé en ce qu'il est constitué d'une enveloppe cylindrique qui est chargée d'une matière adsorbante selon l'une des revendications 1 à 12 et qui est munie à ses extrémités frontales de couvercles qui comportent respectivement une tubulure centrale d'introduction et de sortie.

18. Dispositif selon la revendication 17, caractérisé en ce que l'enveloppe a un diamètre de 3 à 20 cm, de préférence de 5 à 10 cm, et une longueur de 1 à 40 cm, de préférence de 10 à 20 cm.

19. Dispositif selon la revendication 17 ou 18, caractérisé en ce que l'enveloppe est constituée de verre ou de matière plastique.

20. Dispositif selon l'une des revendications 17, 18 ou 19, caractérisé en ce que l'enveloppe comporte sur le couvercle du côté de l'introduction un tamis ayant une largeur de pores de 10 à 300 μm, de préférence de 20 à 100 μm.

21. Dispositif selon l'une des revendications 17 à 20, caractérisé en ce que l'enveloppe est intégrée dans un circuit fermé dans lequel on fait circuler le liquide à l'aide d'une pompe.

22. Dispositif selon l'une des revendications 17 à 21, caractérisé en ce que dans le circuit se trouve une autre enveloppe cylindrique chargée de la matière adsorbante et munie de couvercles avec des tubulures d'introduction et de sortie.

**Revendications pour l'Etat contractant suivant : ES**

1. Procédé de préparation d'une matière adsorbante pour l'élimination sélective de la lipoprotéine Lp(a), de LDL et/ou de VLDL cholestérol de liquides aqueux, en particulier de sang, de plasma ou de sérum, constituée par des corps en verre poreux en tant que matière support solide, avec des groupes fonctionnels organiques comme ligands liés de façon covalente par l'intermédiaire de groupes silanols présents à leur surface, caractérisé en ce que la matière adsorbante comporte comme ligands des restes alkyle de 4 à 12 atomes de carbone contenant au moins un groupement éther avec un groupe α,β-diol terminal et en ce qu'il n'y a pas de groupes silanol libres, les ligands désirés étant couplés aux groupes SiOH des corps en verre par une liaison disiloxane -Si-O-Si-L, où L représente le ligand, au moyen d'une réaction de silylation.

2. Procédé selon la revendication 1, caractérisé en ce que les ligands correspondent à la formule générale

$$-(CH_2)_x-O-(CH_2)_y-\underset{\displaystyle OH}{\underset{|}{CH}}-CH_2OH \qquad (I)$$

dans laquelle x et y représentent des nombres entiers de 1 à 5.

3. Procédé selon la revendication 1 ou 2, caractérisé en ce que la matière adsorbante contient comme ligands des restes 1-aminoéthyl-3-oxypropyle.

4. Procédé selon l'une des revendications précédentes, caractérisé en ce que la matière adsorbante contient comme autres ligands des restes de formule générale

$$-(CH_2)_x-O-(CH_2)_y-CH_2OH \qquad (II)$$

dans laquelle x et y représentent des nombres entiers de 1 à 5.

5. Procédé selon la revendication 4, caractérisé en ce que la matière adsorbante contient comme ligands de formule II un ou plusieurs restes 1-hydroxyéthyl-3-oxybutyle.

6. Procédé selon la revendication 4, caractérisé en ce que la matière adsorbante contient comme ligands un ou plusieurs restes 1-hydroxypropyl-3-oxypropyle.

7. Procédé selon l'une des revendications précédéntes, caractérisé en ce que la matière adsorbante contient comme autres ligands des restes de formule générale

$$-(CH_2)_x-O-(CH_2)_y-C\,R_1\,R_2\,R_3 \qquad (III)$$

dans laquelle $R_1$ représente un reste méthoxy et
$R_2$ et $R_3$ représentent H ou un groupe méthoxy et
x et y représentent des nombres entiers de 1 à 5.

8. Procédé selon la revendication 7, caractérisé en ce que la matière adsorbante contient comme ligands de formule III un ou plusieurs restes 1,1-diméthoxyéthyl-3-oxypropyle.

9. Procédé selon l'une des revendications précédentes, caractérisé en ce que les ligands de formule I, II et III sont liés à la matière support en une proportion d'environ 1,3 : 1 : 0,8 par l'intermédiaire des groupes silanol.

10. Procédé selon l'une des revendications précédentes, caractérisé en ce que les ligands de formule I et II sont liés à la matière support en une proportion de 1:1, 1:2, 1:3 et 1:4 ainsi que de 2:1, 3:1 et 4:1 par l'intermédiaire des groupes silanol.

11. Procédé selon l'une des revendications précédentes, caractérisé en ce que la matière adsorbante présente une surface de 30 à 300 $m^2/g$.

12. Procédé selon l'une des revendications précédentes, caractérisé en ce que le degré de recouvrement de la matière support par les ligands est de 2 à 20 $\mu$moles/$m^2$.

13. Procédé selon l'une des revendications précédentes, caractérisée en ce que les perles de verre ont un diamètre de grains de 60 à 500 $\mu$m et un diamètre de pores de 50 à 350 nm.

14. Procédé d'élimination de LDL et/ou de VLDL cholestérol et/ou de lipoprotéine Lp(a) de liquides aqueux, en particulier de sang, de plasma ou de sérum, caractérisé en ce que l'on fait passer le liquide sur une matière adsorbante préparée selon l'une des revendications 1 à 12.

15. Procédé de détermination de la concentration de LDL et/ou de VLDL cholestérol et/ou de lipoprotéine Lp(a) dans des liquides aqueux, en particulier du sang, du plasma ou du sérum, caractérisé en ce que l'on sépare par chromatographie le LDL et le VLDL cholestérol et la lipoprotéine Lp(a) à l'aide d'une matière adsorbante préparée selon l'une des revendications 1 à 12 et que, après élution de la matière adsorbante, on détermine leur concentration par des méthodes connues en soi.

16. Procédé selon la revendication 15, caractérisé en ce que l'on réalise l'élution avec une solution de chlorure de sodium de masse moléculaire élevée, un mélange de glycérol et d'eau ou une solution d'urée.

17. Dispositif pour l'élimination extracorporelle de LDL et/ou de VLDL cholestérol et/ou de lipoprotéine Lp(a) de liquides aqueux, en particulier de sang, de plasma ou de sérum, caractérisé en ce qu'il est constitué d'une enveloppe cylindrique qui est chargée d'une matière adsorbante préparée selon l'une des revendications 1 à 12 et qui est munie à ses extrémités frontales de couvercles qui comportent respectivement une tubulure centrale d'introduction et de sortie.

18. Dispositif selon la revendication 17, caractérisé en ce que l'enveloppe a un diamètre de 3 à 20 cm, de préférence de 5 à 10 cm, et une longueur de 1 à 40 cm, de préférence de 10 à 20 cm.

19. Dispositif selon la revendication 17 ou 18, caractérisé en ce que l'enveloppe est constituée de verre ou de matière plastique.

20. Dispositif selon l'une des revendications 17, 18 ou 19, caractérisé en ce que l'enveloppe comporte sur le couvercle du côté de l'introduction un tamis ayant une largeur de pores de 10 à 300 $\mu$m, de préférence de 20 à 100 $\mu$m.

21. Dispositif selon l'une des revendications 17 à 20, caractérisé en ce que l'enveloppe est intégrée dans un circuit fermé dans lequel on fait circuler le liquide à l'aide d'une pompe.

22. Dispositif selon l'une des revendications 17 à 21, caractérisé en ce que dans le circuit se trouve une autre enveloppe cylindrique chargée de la matière adsorbante et munie de couvercles avec des tubulures d'introduction et de sortie.

FIG. 1

Festkörper C-13 NMR-Spektren der Bioranglasliganden

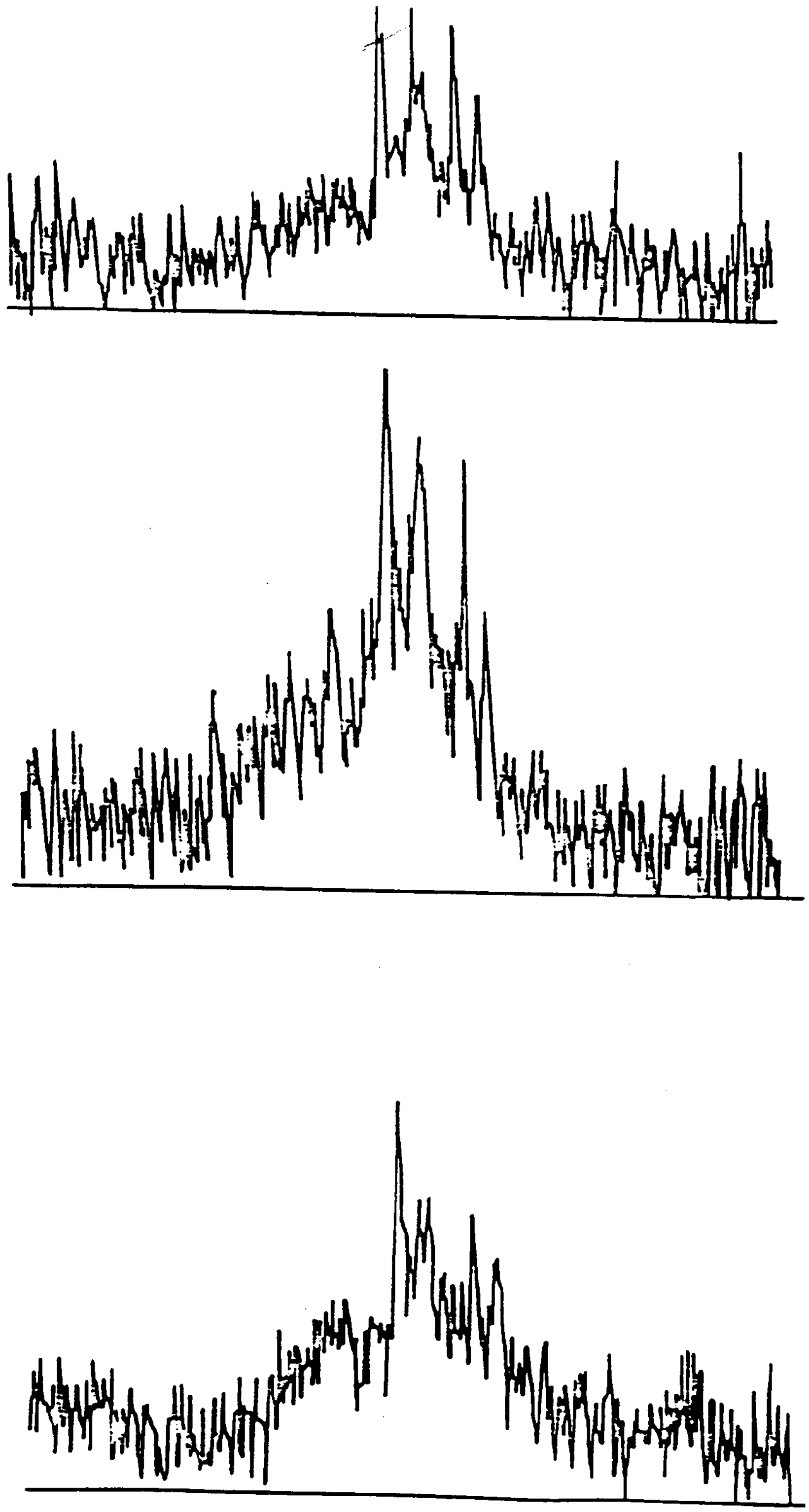

A: 1-Hydroxyethyl-3-oxybutyl-Bioran-Disiloxan

B: 1:1 Gemisch 1-Hydroxyethyl-3-oxybutyl-/Glycidoxypropyl-Bioran-Disiloxan

C: Gemisch 1-Hydroxyethyl-3-oxybutyl/1.2-Dihydroxypropyl-3-oxypropyl-Bioran-Disiloxan